# EUROPEAN PATENT SPECIFICATION

(11) **EP 1 190 792 B1**
(45) Date of publication and mention of the grant of the patent: **26.05.2004**
(21) Application number: 01121245.3
(22) Date of filing: 05.09.2001
(51) Int. Cl.: B23B 3/16, B23Q 1/01, B23Q 1/25, B23Q 39/02

(54) **Headstock guide unit for machine tool**
Spindelstockführungseinheit für eine Werkzeugmaschine
Unité de guidage de poupée pour une machine-outil

(30) Priority: 18.09.2000 JP 2000281323
(43) Date of publication of application: 27.03.2002
(73) Proprietor: Mori Seiki Co., Ltd., Yamatokoriyama-shi, Nara-ken 639-1183 (JP)
(72) Inventor: Nakaminami, Masamitsu, Yamatokoriyama-shi, Nara-ken 639-1183 (JP); Adachi, Jun, Yamatokoriyama-shi, Nara-ken 639-1183 (JP)
(74) Representative: Kern, Ralf M., Dipl.-Ing.

(56) References cited:
- EP-A- 0 319 731
- EP-A- 1 153 682
- DE-A- 4 441 106
- GB-A- 2 215 251
- US-A- 5 293 793
- US-A- 5 655 423
- PATENT ABSTRACTS OF JAPAN vol. 012, no. 428 (M-762), 11 November 1988 (1988-11-11) & JP 63 162101 A (OKUMA MACH WORKS LTD), 5 July 1988 (1988-07-05)

## Description

### BACKGROUND OF THE INVENTION

The present invention relates to a headstock guide unit for a machine tool in which a carriage with a tool post mounted thereon is disposed on a fixed bed on one side thereof nearer to an operator while a headstock for loading a workpiece thereon is provided on the other side of the fixed bed farther from the operator.

From DE-A-4 441 106 there is known a headstock guide unit for a machine tool in which a carriage with a tool post mounted thereon is provided on a fixed bed on one side thereof nearer to an operator, and in which a headstock is provided on the other side of the fixed bed farther from the operator, wherein the headstock is fixed to a headstock base, the headstock base and the headstock being moveable between a workpiece machining position for machining a workpiece on one side farther from the operator and a workpiece loading/unloading position for loading or unloading the workpiece on the other side nearer to the operator, and wherein a chip collecting space is provided by cutting out a portion, the headstock guide unit further comprising a guide support mechanism for supporting, by the fixed bed, a front portion of the headstock base on which the headstock is mounted when the headstock base is positioned at the workpiece machining position, and supporting, by the fixed bed, a rear portion of the headstock base when the headstock base is positioned at the workpiece loading/unloading position.

As an example, there has conventionally been provided a mass-production type machine tool (NC lathe) in which carriages each with a tool post mounted thereon are provided left and right on one side of the fixed bed nearer to the operator, as viewed from the operator so as to be movable in X- and Z-axis directions, respectively, while a headstock is fixedly provided on the farther side from the operator between the two tool posts.

With this type of NC lathe, a workpiece is mounted on the spindle of the headstock, the workpiece is subjected to a specified cutting process by moving the left-and-right carriages and the tool post relative to each other while keeping the workpiece driven into rotation.

With this conventional machine tool, because of its adoption of the structure that the headstock is fixedly set on the rear side of the left-and-right tool posts, the work of replacing the workpiece of the spindle would inevitably be performed on the deep side of the fixed bed, resulting in a problem of poor workability.

Also in this conventional machine tool, there are some cases where chips generated by the workpiece machining are discharged to the operator side. In such a case, the chips are more likely to interfere with the workpiece loading/unloading work, resulting in a problem of poor workability also in this point.

In this connection, from the viewpoint of enabling easy accomplishment of the workpiece loading/unloading work, the present inventors have developed a machine tool which is so structured that a headstock is fixed to a headstock base, the headstock base being movable between a workpiece machining position on one side farther from the operator and a workpiece loading/unloading position on the other side nearer to the operator, and further that a chip collecting space is provided at a site of the fixed bed corresponding to the workpiece loading/unloading position.

With this machine tool, it becomes possible to perform the workpiece loading/unloading work at a proximity to the operator on the front side of the fixed bed. Besides, since chips generated by the workpiece machining drop into the chip collecting space of the fixed bed, it can be prevented that chips interfere with the workpiece loading/unloading work.

In the case of the structure that a chip collecting space is formed at a site of the fixed bed corresponding to the workpiece loading/unloading position, the headstock is supported on its one side by the headstock base at the workpiece loading/unloading position. This necessitates ensuring support rigidity and supported strength of the headstock at the workpiece loading/unloading position, which poses a demand for measures in this point.

### SUMMARY OF THE INVENTION

The present invention having been accomplished in view of these conventional circumstances, an object of the invention is to provide a headstock guide unit for a machine tool which allows the workpiece loading/unloading work to be easily achieved and which allows the support strength and support rigidity in supporting the headstock on its one side at the workpiece loading/unloading position to be ensured.

In order to achieve the above object, in a first aspect of the invention, there is provided a headstock guide unit as defined in claim 1.

In a second aspect of the invention, in the headstock guide unit for a machine tool as described in the first aspect, the guide support mechanism comprises rails fixedly placed so as to extend along left-and-right edge portions of the chip collecting space of the fixed bed, and guides which are fixed on the headstock base and which are to be slidably engaged with the rails.

In a third aspect of the invention, in the headstock guide unit for a machine tool as described in the first aspect, the guide support mechanism comprises a cam follower which is provided on the fixed bed and which makes rolling contact with a front lower surface of the headstock base, and a second cam follower which is provided at a rear portion of the fixed bed, rear of the first cam follower, and which makes rolling contact with a rear upper surface of the headstock base.

With the headstock guide unit according to the present invention, since the headstock is fixed to the headstock base and since the headstock base is made movable between the workpiece machining position on one side farther from the operator and the workpiece loading/unloading position on the other side nearer to the operator, the work of loading and unloading the workpiece can be carried out at a place in proximity to the operator on the front side of the fixed bed, thus allowing the workpiece loading/unloading workability to be improved.

Also in this invention, since the chip collecting space is provided at a portion of the fixed bed corresponding to the workpiece loading/unloading position, chips generated by the workpiece machining drop into the chip collecting space of the fixed bed, it can be prevented that chips interfere with the workpiece loading/unloading work, so that the workability can be improved also in this point.

Furthermore, in the present invention, since the headstock guide unit further comprises a guide support mechanism for supporting, by the fixed bed, a front portion of the headstock base on which the headstock is mounted when the headstock base is positioned at the workpiece machining position, and supporting, by the fixed bed, a rear portion of the headstock base at the workpiece loading/unloading position, the support rigidity and support strength of the headstock at the workpiece machining position can be ensured, and moreover the headstock can be moved to the workpiece loading/unloading position without any obstacle.

Also, in the second aspect of the invention, since the guide support mechanism comprises rails fixed at left-and-right edge portions of the chip collecting space of the fixed bed, and guides fixed on the headstock base and slidably engaged with the rails, the headstock base can securely be supported by the slide of the guides and the rails even when the headstock base is overhung during the workpiece loading/unloading process.

Also, in the third aspect of the invention, since the guide support mechanism comprises a cam follower which makes rolling contact with a front lower surface of the headstock base and a second cam follower which makes rolling contact with a rear upper surface of the headstock base, the headstock base can be supported so as to be movable between the workpiece loading/unloading position and the workpiece machining position at low cost and with simple construction.

### BRIEF DESCRIPTION OF THE DRAWINGS

Fig. 1 is a perspective view of the machine body of an NC lathe according to an embodiment of the invention, as viewed from an oblique front;
Fig. 2 is a perspective view of the machine body as viewed from an oblique rear;
Fig. 3 is a front view of a cover provided on the machine body;
Fig. 4 is a plan view of the machine body;
Fig. 5 is a front view of a headstock guide unit of the NC lathe;
Fig. 6 is a side view of a chip processing unit of the NC lathe;
Fig. 7 is a sectional view of a first clamp mechanism of the machine body;
Fig. 8 is a sectional view of a second clamp mechanism of the machine body;
Fig. 9 is a perspective view showing a guide support mechanism according to an embodiment of the third aspect of the invention;
Fig. 10 is a view showing operation of the guide support mechanism; and
Fig. 11 is a front view of the guide support mechanism.

### DETAILED DESCRIPTION OF THE PREFERRED EMBODIMENT

Hereinbelow, an embodiment of the present invention is described with reference to the accompanying drawings.

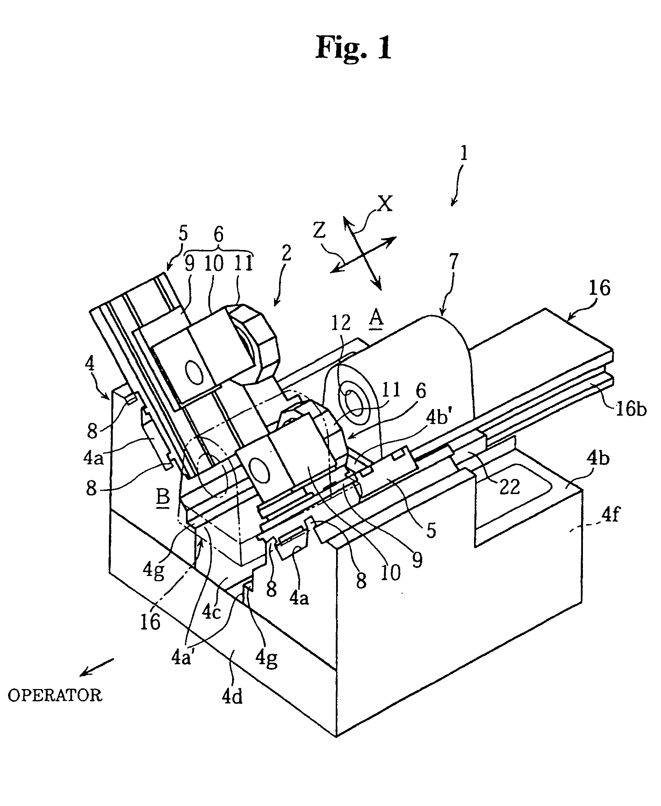

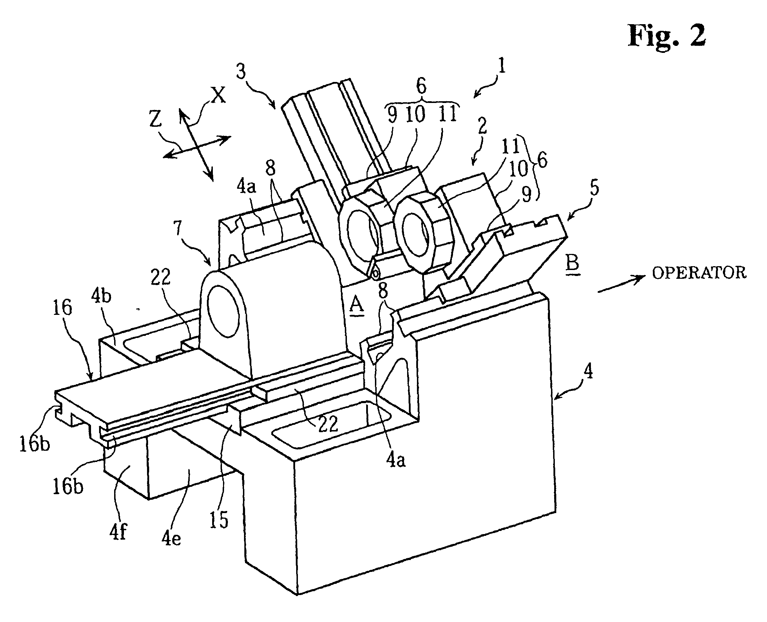

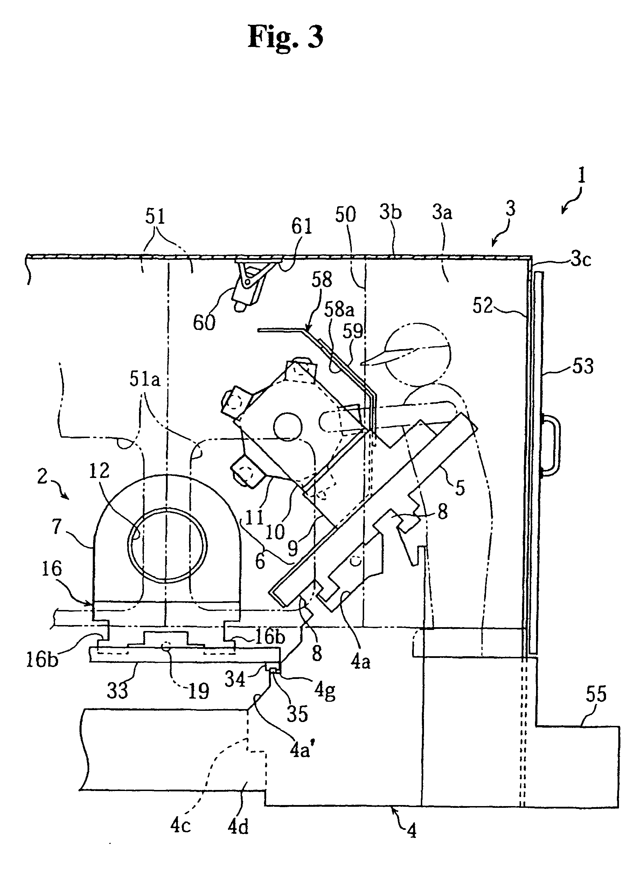

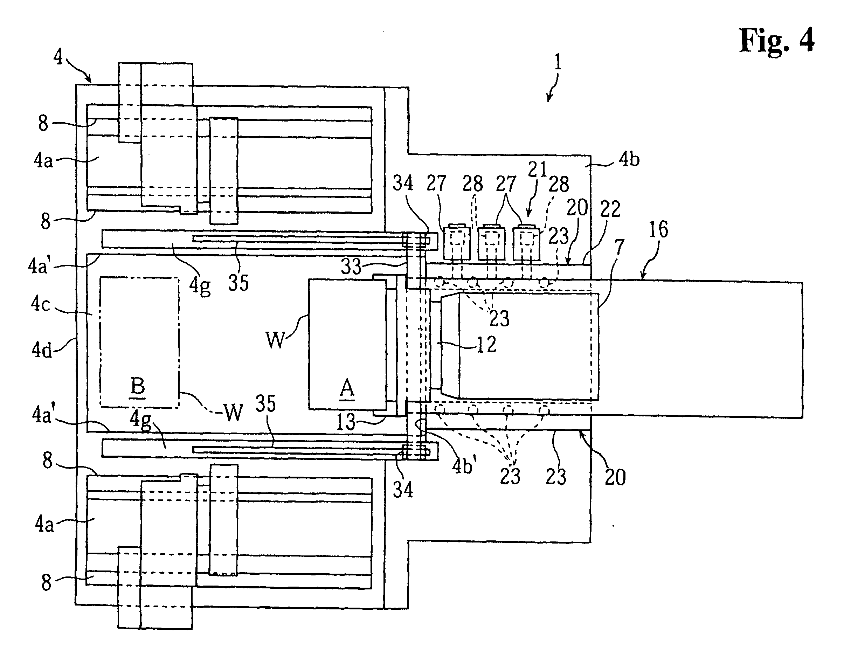

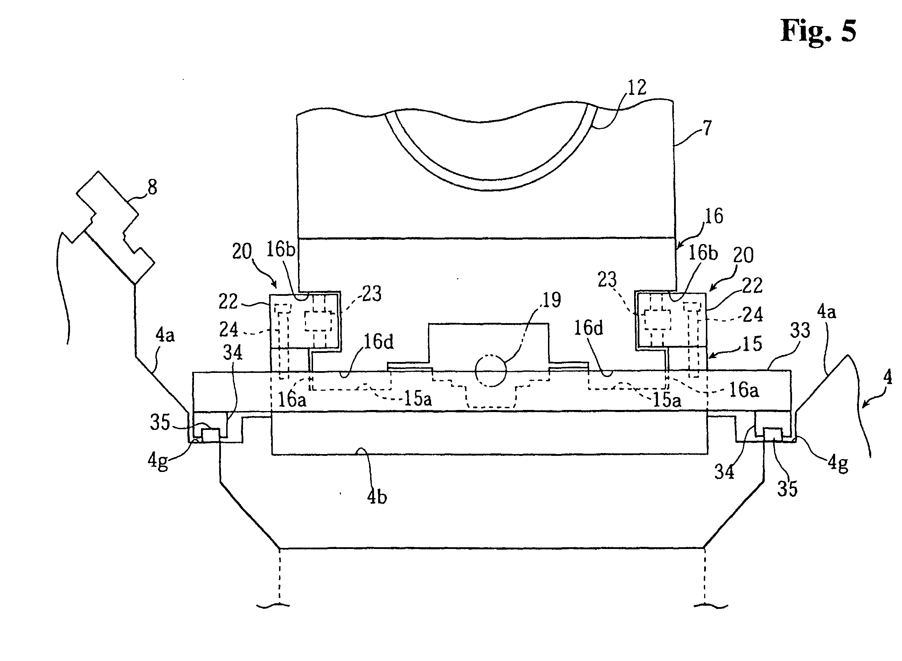

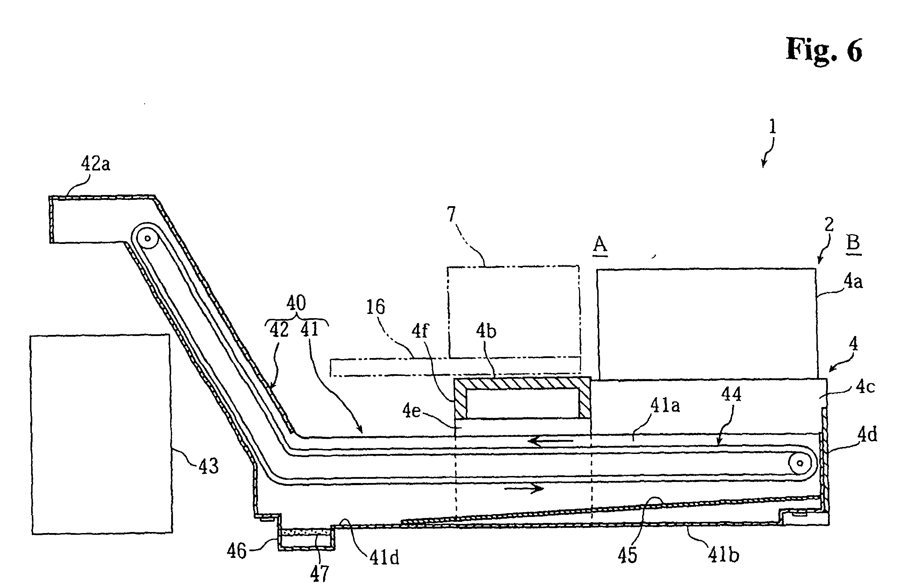

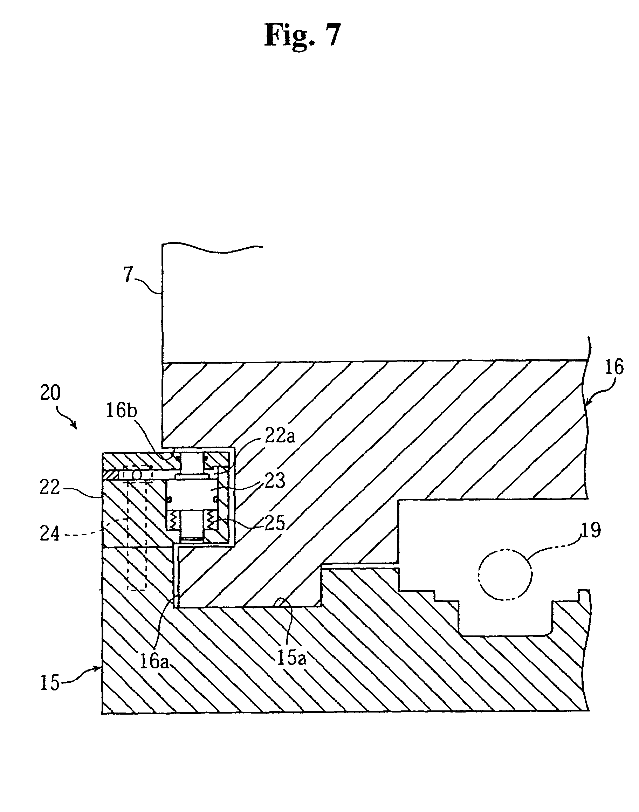

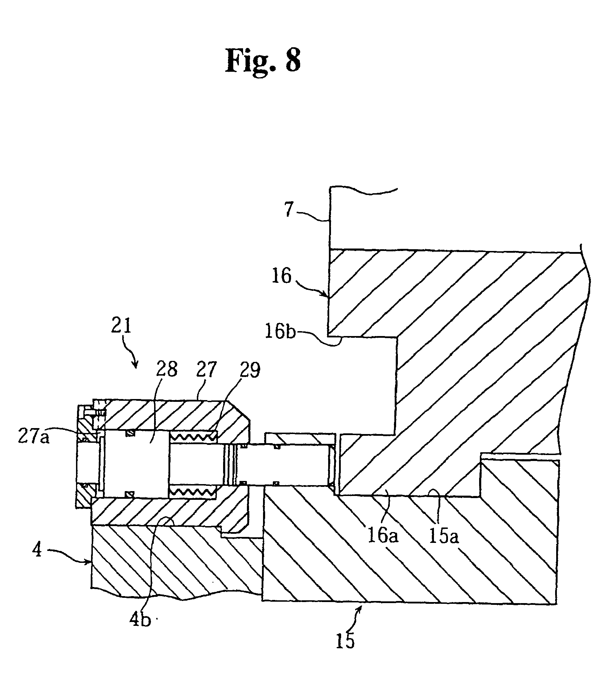

Figs. 1 through 8 are views for explaining a headstock for a machine tool in accordance with one embodiment of the invention. Fig. 1 is a perspective view of the machine body of the NC lathe as viewed from an oblique front, Fig. 2 is a perspective view of the machine body as viewed from an oblique rear, Fig. 3 is a front view of a cover for the machine body, Fig. 4 is a plan view of the machine body, Fig. 5 is a front view of a headstock guide unit, Fig. 6 is a side view of a chip processing unit, and Figs. 7 and 8 are sectional views of a first clamp mechanism and a second clamp mechanism, respectively. The terms, front and rear, left and right, are referred to in this embodiment as they are viewed from the operator side, that is, the near side means the front, the farther side means the rear, the left side means the left, and the right side means the right of the operator.

Referring to the figures, reference numeral 1 denotes an NC lathe (machine tool) which is to be used for, for example, the machining of aluminum wheels, and which is so constituted that its machine body 2 is externally surrounded by a cover 3. In this machine body 2, as viewed from the operator, carriages 5, 5 are provided on the left and right side in a front end portion (on one side nearer to the operator) of a fixed bed 4 so as to be movable in a Z-axis direction (back-and-forth direction), tool posts 6, 6 are mounted on the individual carriages 5, respectively, so as to be movable in an X-axis direction (oblique left-and-right directions), and a headstock 7 is disposed on the rear side (on the side farther from the operator) of the fixed bed 4 between the left-and-right carriages 5, 5 so as to have its axis line directed along the Z-axis direction and be movable in the Z-axis direction.

The fixed bed 4 is formed generally rectangular parallelopiped by casting. Left-and-right sloped portions 4a, 4a are formed in a front portion of this fixed bed 4 so as to form a V shape as viewed in a front view, while a flat portion 4b stepped down from the sloped portions 4a is formed in the rear portion.

A recessed portion 4c for use of chip collection is formed as a cut-out in the front portion of the fixed bed 4, and this recessed portion 4c is surrounded by left-and-right lower end portions 4a' of the left-and-right sloped portions 4a, a front end portion 4b' of the flat portion 4b and a front end wall 4d of the fixed bed 4. Also, a tunnel 4e is formed within the flat portion 4b so as to communicate with the recessed portion 4c, and a rear end of the tunnel 4e is opened outward from a rear end wall 4f of the fixed bed 4. The recessed portion 4c and the tunnel 4e constitute a chip collecting passage through which chips occurring during the workpiece machining are discharged from the rearward on one side of the fixed bed 4 opposite to the operator.

The carriages 5 are provided so as to be along the left-and-right sloped portions 4a, and each of the carriages 5 is slidably supported by a pair of upper-and-lower guide surfaces 8, 8 formed in the sloped portion 4a. The carriage 5 is reciprocatingly driven in the Z-axis direction by an unshown drive mechanism such as a servomotor and ball screw.

Each of the tool posts 6 is generally so structured that a tool post body 10 is fixed on a tool post base 9 slidably supported by the carriage 5, and that a turret head 11 with a plurality of tools mounted thereon is rotationally indexably provided on the rear face of the tool post body 10. The tool post base 9 is reciprocatingly driven in the X-axis direction by an unshown drive mechanism such as a servomotor and ball screw.

The headstock 7, which is generally hemi-elliptically formed as viewed in a front view, has a spindle 12 inserted therein and is rotatably supported via a plurality of bearings (not shown). A chuck 13 for gripping a workpiece W is mounted on this spindle 12, and driven into rotation by an unshown spindle drive motor.

As shown in Fig. 5, a fixed base 15 is fixedly attached on top of the flat portion 4b of the fixed bed 4, and slide recessed portions 15a, 15a extending in the back-and-forth direction are formed on left-and-right side portions of the fixed base 15. A headstock base 16 is provided on this fixed base 15 so as to be movable in the Z-axis direction. This headstock base 16 is a rectangular plate shaped one which extends in the back-and-forth direction, having the headstock 7 fixedly mounted thereon in a front portion thereof, and a rear portion thereof extends so as to protrude and overhang rearward from the rear end of the flat portion 4b.

Protruding portions 16a, 16a to slidably engage with the slide recessed portions 15a, respectively, are formed at left-and-right both end portions of the underside of the headstock base 16, so that lower face and inner side face of each protruding portion 16a are in surface contact with upper face and inner side face of the slide recessed portion 15a. The headstock base 16 is reciprocatingly driven by rotationally driving a ball screw 19 provided in the fixed base 15 with an unshown servomotor, by which the headstock 7 is made movable between a workpiece machining position A where the workpiece W is machined on the flat portion 4b on the farther side from the operator, and a workpiece loading/unloading position B where a machined workpiece is replaced with a next-object workpiece above the recessed portion 4c on the nearer side to the operator.

In this arrangement, when the headstock base 16 is at the workpiece machining position A, the front portion of the headstock base 16 where the headstock 7 is mounted is supported by the fixed base 15. When the headstock base 16 is at the workpiece loading/unloading position B, the rear portion of the headstock base 16 extending and overhanging rearward from the front portion where the headstock 7 is mounted is supported by the fixed base 15.

First and second clamp mechanisms 20 and 21 for positioning and clamping the headstock base 16 to the fixed bed 4 are provided on the fixed bed 4. The first clamp mechanisms 20 are provided on left-and-right both side portions of the headstock base 16, and the second clamp mechanism 21 is provided only on the left side portion of the headstock base 16 (see Fig. 4).

As shown in Fig. 7, the first clamp mechanisms 20 is generally so structured that four pistons 23 are inserted within one hydraulic cylinder block 22 so as to be slidable up and down. The hydraulic cylinder block 22 is fixed at left-and-right end portions of the top face of the fixed base 15 with a plurality of bolts 24.

A portion of the hydraulic cylinder block 22 including the pistons 23 is inserted and placed within a recessed portion 16b recessed in a side wall of the headstock base 16 in a contactless manner, where the pistons 23 are opposed to the protruding portion 16a of the headstock base 16. When oil pressure is supplied to an oil chamber 22a of the hydraulic cylinder block 22, the pistons 23 go down, pressing and fixing the headstock base 16 to the fixed base 15. When the oil pressure is released, a spring 25 makes the pistons 23 go up, by which the clamping is released.

As shown in Fig. 8, the second clamp mechanism 21 is so constituted that three hydraulic cylinders 27, 27, 27 are placed in parallel and fixedly bolted on top of the flat portion 4b of the fixed bed 4, and that a piston 28 is inserted within each hydraulic cylinder 27 so as to be slidable horizontally. Each of these pistons 28 is opposed to the left side face of the protruding portion 16a of the headstock base 16 through the fixed base 15.

When oil pressure is supplied to an oil chamber 27a of each hydraulic cylinder 27, each piston 28 advances rightward to press and fix the headstock base 16 to the fixed base 15. When the oil pressure is released, springs 29 make the piston 28 retreat, by which the clamping is released.

The fixed bed 4 is equipped with a headstock guide unit for guiding and supporting the headstock base 16 between the workpiece machining position A and the workpiece loading/unloading position B. This headstock guide unit has the following structure.

In the front face of the headstock base 16 is provided a prismatic support member 33 extending widthwise, and the support member 33 is fixedly positioned by being coupled with cutout portions 16d formed by cutting out the headstock base 16 in its front lower edge. Guides 34, 34 are fixed at left-and-right both end portions of the lower face of the support member 33.

At the lower end portions 4a' of the left-and-right sloped portions 4a of the fixed bed 4, planar portions 4g are formed in a stepped-down shape so as to extend in the back-and-forth direction along the lower end portions 4a'. Rails 35 are fixedly bolted on the upper surface of these left-and-right planar portions 4g, and the guides 34 are slidably engaged with these rails 35.

At the bottom of the fixed bed 4, as shown in Fig. 6, is provided a chip processing unit for collecting, and discharging out of the machine, coolant supplied to the cutting portion of the workpiece and chips generated during the machining. This chip processing unit has the following structure.

A coolant tank 40 is provided within a chip collecting passage defined by the recessed portion 4c and the tunnel 4e of the fixed bed 4. This coolant tank 40 extends over the entire length of the recessed portion 4c and the tunnel 4e, being further equipped with a tank body 41 extending from the rear end wall 4f of the fixed bed 4 rearward of the machine, and a discharge duct portion 42 rising up and extending obliquely rearward from the rear end of the tank body 41.

The tank body 41, made up of left-and-right side walls 41a, 41a and a bottom wall 41b, is formed into an upward-opening box shape. The discharge duct portion 42 is formed into a cylindrical shape with its rear end portion 42a opened downward. Below the opening of this rear end portion 42a is provided a chip collecting bucket 43.

An endless chip conveyor 44 is provided within the coolant tank 40 so as to extend over the entire length thereof, and the chip conveyor 44 is driven into rotation by an unshown drive motor. This chip conveyor 44, being a strip conveyor made up by hinge-connecting a multiplicity of thin strip plates to one another, serves for collecting and conveying chips that have dropped into the coolant tank 40 while letting coolant and fine chips drop to the bottom wall portion 41b.

At the bottom wall portion 41b of the tank body 41 is provided a sloped plate 45 for cleaning away, to a downstream end portion 41d of the tank body 41, coolant and chips that have dropped through the chip conveyor 44. The sloped plate 45 is so set as to be sloped from front to rear side. Also, a resin film (not shown) for smoothing the slide of the chips is provided so as to cover the upper surface of the sloped plate 45, by which the chips are prevented from sticking without increasing the slope angle by virtue of the resin film.

A coolant collecting passage 46 is communicated and connected to the downstream end portion 41d of the tank body 41, and a filter 47 for filtrating the chips is provided at an inlet of the collecting passage 46. This collecting passage 46 is communicated and connected to an unshown clean tank provided, for example, in a separate chamber, so that the coolant is collected to the clean tank.

Chips and coolant generated during the machining drop into the tank body 41 within the recessed portion 4c, and the chips are conveyed out of the machine by the chip conveyor 44 and collected to the collecting bucket 43.

Meanwhile, the coolant and the chips that have passed through the chip conveyor 44 drop onto the sloped plate 45, and the coolant naturally flows along this sloped plate 45. Then, this flow of the coolant causes the chips as well to be cleaned away to the downstream end portion 41d. This cleaned-away chips in the coolant are filtrated by the filter 47, and collected periodically. Further, the coolant from which the chips have been filtrated away passes through the coolant collecting passage 46, and collected to the clean tank.

The cover 3, which is formed of an iron plate, covers the front-and-rear faces, left-and-right side faces and top face of the machine body 2 as shown in Fig. 3. An operation-use door opening 50 is formed in a front wall 3a of the cover 3 that covers the front face of the machine body 2. The door opening 50 has a lower edge set at a portion confronting the headstock base 16, and an upper edge set at the front edge of a ceiling wall 3b.

The door opening 50 is provided with a pair of left-and-right front doors 51, 51, and each front door 51 is supported so as to be slidable widthwise. The front doors 51, 51 each have a window 51a with a transparent glass fitted thereto.

Side door openings 52 are formed in left-and-right side walls 3c, 3c of the cover 3 that cover the left-and-right side faces of the machine body 2, respectively. Each of the door openings 52 is provided at a portion of the tool post 6 confronting the turret head 11 as the tool post 6 is in the standby position. Opening height and opening width of this door opening 52 are so set as to allow the operator to go in and out. A side door 53 for opening and closing the door opening 52 is provided on the side wall 3c, and the side door 53 is supported so as to be slidable in the back-and-forth direction.

A footstool 55 is provided at the door opening 52 so as to stretch over a range from an in-machine position beside the machine body 2 and an out-of-machine position outer than the side door 53. Use of this footstool 55 gives access for the operator's hands from the door opening 52 to the tools of the in-machine turret head 11.

Around the left-and-right sloped portions 4a of the fixed bed 4 is provided a protector 58 formed of an iron plate. This protector 58 covers upward of the turret head 11 and vicinities of the carriages 5 of the sloped portions 4a, thereby preventing chips from entering to the sliding portions of the carriages 5. An operation-use opening 58a is formed at a portion of the protector 58 confronting the turret head 11, and a sliding shutter 59 is provided at the operation-use opening 58a. Opening this shutter 59 allows the operator's hands to make access to the tools of the turret head 11.

For replacing the tools of the turret head 11, the operator opens the side door 53, steps up on the footstool 55, enters into the machine through the door opening 52, and opens the shutter 59 of the protector 58.

The cover 3 is provided with a workpiece-machining-point display unit for verifying whether or not the contents of previously inputted machining programs operate correctly. This workpiece-machining-point display unit is composed of a CCD camera 60 as an image pickup device provided inside the ceiling wall 3b of the cover 3, and a display (not shown) as an image display means provided on the front wall 3a of the cover 3. The CCD camera 60 is supported adjustable in angles by a support bracket 61 fixedly attached to the ceiling wall 3b, by which an image of the workpiece W on the headstock 7 placed at the workpiece machining position A is displayed on the display.

With the workpiece-machining-point display unit of this embodiment, since the CCD camera 60 is provided on the ceiling wall 3b of the cover 3 so that a workpiece W set on the headstock 7 is imaged and displayed on the display by the CCD camera 60, a machining point of the workpiece W can be ascertained by image at a place separate from the workpiece without the need for visually checking the machining point directly from the machine outside through the window, thus program checks to be accomplished easily and securely.

Then, in the NC lathe 1 of this embodiment, while the carriage 5 and the tool post 6 are moved in the Z- and X-axis directions, respectively, relative to each other, the workpiece W set on the spindle 12 is subjected to specified cutting process. In this case, the workpiece W may be worked either by the two tool posts 6, 6 simultaneously or by each one tool post 6 alternately.

When the machining of the workpiece is completed, the carriage 5 and the tool post 6 move to a specified standby position, standing by there, where the headstock base 16 is moved forward so that the headstock 7 is moved to the workpiece loading/unloading position B. At this workpiece loading/unloading position B, the machined workpiece is unloaded and the next-object workpiece is loaded. This workpiece replacement may also be done automatically by robot hand.

As shown above, according to the NC lathe of this embodiment, since the headstock 7 is fixed to the headstock base 16 and since the headstock base 16 is made movable between the workpiece machining position A on one side farther from the operator and the workpiece loading/unloading position B on the other side nearer to the operator, the work of loading and unloading the workpiece W can be carried out at a place in proximity to the operator on the front side of the fixed bed 4, thus allowing the workpiece loading/unloading workability to be improved.

In this embodiment, since the door openings 52 are provided in the left-and-right side walls 3c of the cover 3 so as to confront the turret heads 11 of the tool posts 6, respectively, as the tool posts 6 are in their standby positions, and since the side doors 53 for opening and closing the openings 52 are provided, the work of replacing the tools of the turret heads 11 can be carried out at a place in proximity to the turret heads 11 provided in side portions of the machine body 2, thus allowing the tool replacing workability to be improved.

Also, since the operation-use opening 58a is formed in the protector 58 provided on the in-machine side and since the shutter 59 for opening and closing the operation-use opening 58a is provided, the tool replacing work can be facilitated by opening the shutter 59, and besides chips and coolant can be prevented from scattering by keeping the shutter 59 closed during the machining.

With the chip processing unit of this embodiment, since the chip conveyor 44 is provided within the coolant tank 40, the sloped plate 45 is provided at the bottom portion, and since chips that have passed through the chip conveyor 44 are cleaned away to the downstream end portion 41d by the coolant, the chips can be prevented from being accumulated at the tank bottom.

Also, the cleaned-away chips in the coolant are filtrated by the filter 47 and thus can be collected periodically. This is a relatively simple removal work, and therefore the working efficiency in the discharge of the chips can be improved.

Furthermore, since the coolant filtrated by the filter 47 is collected to a separately placed clean tank, it becomes possible to supply the coolant in the clean tank, as it is, to the machining part of the workpiece W, thus allowing the working efficiency for coolant collection to be enhanced.

Also in this embodiment, since the recessed portion 4c for use of chip collection is provided in the front portion of the fixed bed 4, since the tunnel 4e is provided in the flat portion 4b so as to extend rearward in adjacency to the recessed portion 4c and be opened in the rear end wall 4f, and since the coolant tank 40 is provided within these chip-collecting recessed portion 4c and tunnel 4e, it becomes possible to discharge chips and coolant to one side opposite to the operator, so that neither the coolant tank 40 nor the chips interfere with the workpiece loading/unloading work, thus allowing the workability to be improved.

With the headstock guide unit, since the rails 35 extending in the back-and-forth direction are fixedly bolted to the lower end portions 4a' of the left-and-right sloped portions 4a of the fixed bed 4, since the left-and-right guides 34 are fixed to the front end portion of the headstock base 16 via the support member 33, and since the guides 34 are slidably engaged with the rails 35, support rigidity and support strength of the headstock 7 at the workpiece machining position A can be ensured and moreover the headstock 7 can be moved to the workpiece loading/unloading position B without any obstacle.

Also, even when the headstock base 16 is overhung during the workpiece loading/unloading process, the headstock base 16 can securely be supported by the slide of the guides 34 and the rails 35.

It is noted here that although the above embodiment has been described on a case where the guide support mechanism is comprised of the rails 35 and the guides 34 to be slidably engaged with the rails 35, the guide support mechanism is not limited to this.

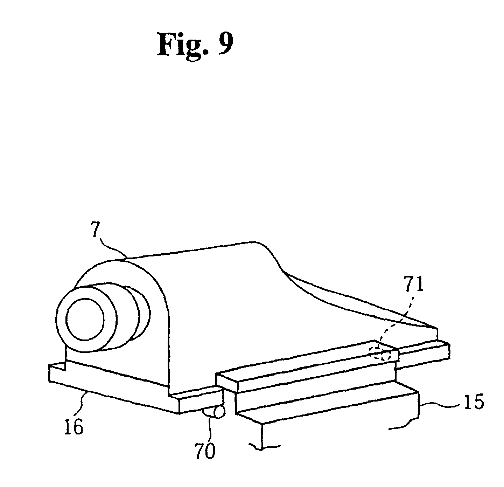

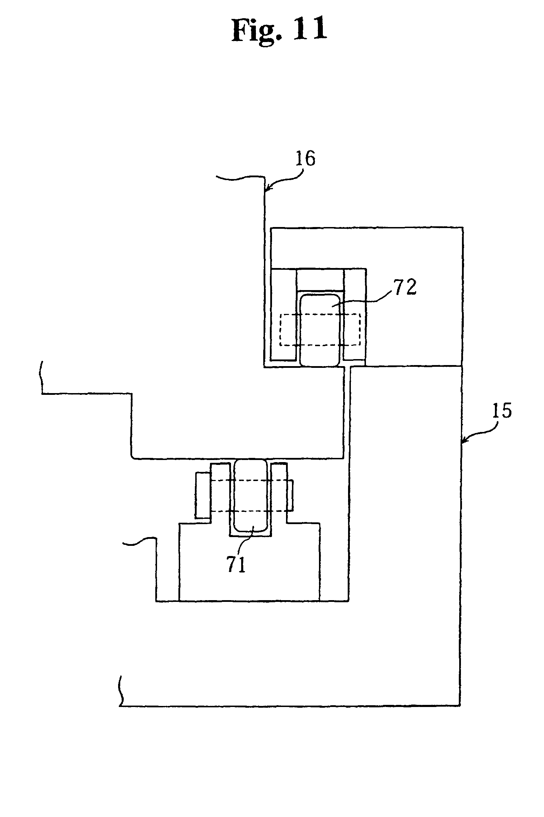

Figs. 9 through 11 are views for explaining a guide support mechanism according to an embodiment of the third aspect of the invention. In the figures, the same reference numerals as in Fig. 5 denote the same or similar component members.

In the guide support mechanism of this embodiment, first cam followers 70 are fixedly set at left-and-right front end portions of a fixed base 15 fixed to the fixed bed 4, while second cam followers 71 are fixedly set at left-and-right rear end portions of the fixed base 15, where the first cam followers 70 are in rolling contact with the lower surface of the headstock base 16 and the second cam followers 71 are in rolling contact with the upper surface of the headstock base 16.

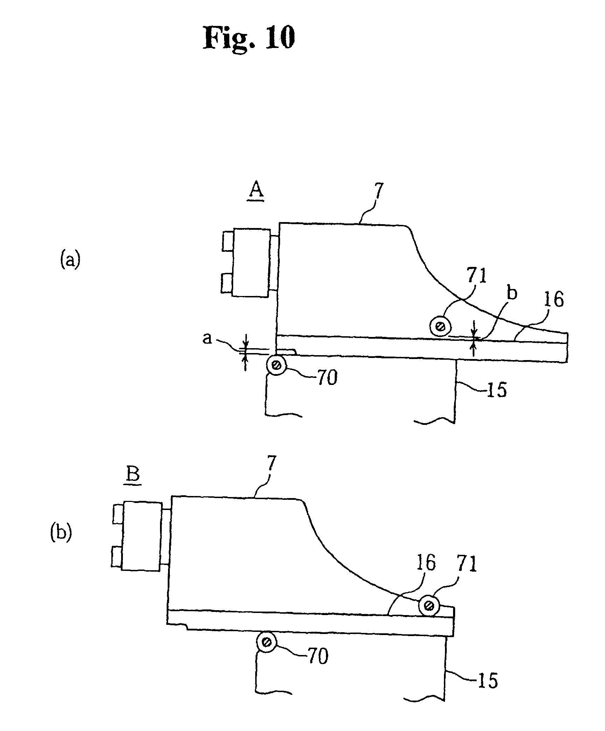

A gap 'a' between the first cam followers 70 and lower surface of the headstock base 16 at the workpiece machining position A is set to about 0.1 mm, and a gap 'b' between the second cam followers 71 and the upper surface of the headstock base 16 is set to about 0.03 mm (see Fig. 10A). By providing differences between 'a' and 'b', front and rear, in this way, the headstock base 16 can securely be supported even in a front-tilted state at the workpiece loading/unloading position B.

In this embodiment, since the first cam followers 70 to make rolling contact with lower-face front end portions of the headstock base 16 and the second cam followers 71 to make rolling contact with upper-face rear end portions of the headstock base 16 are provided, the headstock base 16 can be supported so as to be movable between the workpiece machining position A and the workpiece loading/unloading position B at low cost and with simple construction.

## Claims

1. A headstock guide unit for a machine tool in which a carriage (5) with a tool post (6) mounted thereon is provided on a fixed bed (4) on one side thereof nearer to an operator, and in which a headstock (7) is provided on the other side of the fixed bed (4) farther from the operator, wherein the headstock (7) is fixed to a front portion of an oblong shaped headstock base (16), the headstock base (16) and the headstock (7) being moveable between a workpiece machining position for machining a workpiece on one side farther from the operator and a workpiece loading/unloading position for loading or unloading the workpiece on the other side nearer to the operator and the front portion is overhung from the fixed bed (4) toward, the operator side when the headstock (7) has advanced to the workpiece loading/unloading position, and a rear portion of the headstock base (16) extends rearwardly from the fixed bed (4) so as to protrude therefrom, and wherein a chip collecting space is provided by cutting out a portion, the headstock guide unit further comprising a guide support mechanism for supporting, by the fixed bed (4), a front portion of the headstock base (16) on which the headstock (7) is mounted when the headstock base (16) is positioned at the workpiece machining position, and supporting, by the fixed bed (4), a rear portion of the headstock base when the headstock base is positioned at the workpiece loading/unloading position.

2. The headstock guide unit for a machine tool according to Claim 1, wherein the guide support mechanism comprises: rails fixedly placed so as to extend along left-and-right edge portions of the chip collecting space of the fixed bed (4); and guides fixed on the headstock base (16) and slidably engaged with the rails.

3. The headstock guide unit for a machine tool according to Claim 1, wherein the guide support mechanism comprises: a cam follower which is provided on the fixed bed (4) and which makes rolling contact with a front lower surface of the headstock base (16); and a second cam follower which is provided at a rear portion of the fixed bed, rear of the first cam follower, and which makes rolling contact with a rear upper surface of the headstock base (16).

## Patentansprüche

1. Spindelstock-Führungseinheit für eine Werkzeugmaschine, in der ein Wagen (5) mit einem Werkzeughalter (6), der darauf montiert ist, auf einem festen Bett (4) an einer Seite näher bei einem Bediener vorgesehen ist, und bei der ein Spindelstock (7) auf der anderen Seite des festen Bettes (4) weiter von den Bediener entfernt vorgesehen ist, wobei der Spindelstock (7) an einem Vorderabschnitt einer länglich geformten Spindelstockbasis (16) befestigt ist, wobei die Spindelstockbasis (16) und der Spindelstock (7) zwischen einer Werkstückbearbeitungsposition zum Bearbeiten eines Werkstückes an einer Seite weiter von dem Bediener entfernt und einer Werkstückeinlege-/Entnahmeposition zum Einlegen und Entnehmen des Werkstückes an der anderen Seite, die näher bei dem Bediener ist, beweglich ist, und wobei der Vorderabschnitt von dem festen Bett (4) in Richtung der Bedienerseite übersteht, wenn der Spindelstock in die Werkstückeinlege-/Entnahmeposition vorgerückt ist, und wobei ein rückwärtiger Abschnitt der Spindelstockbasis (16) sich nach hinten von dem festen Bett (4) erstreckt, um davon hervor zu stehen, und wobei ein Span-Sammelraum durch Ausschneiden eines Abschnittes vorgesehen ist, wobei die Spindelstock Führungseinheit ferner einen Führungs-Stützmechanismus zum Stützen durch das feste Bett (4) aufweist, einen Vorderabschnitt der Spindelstockbasis (16) an der der Spindelstock (7) montiert ist, wenn die Spindelstockbasis (16) in der Werkstückbearbeitungsposition positioniert ist, und wobei durch das feste Bett (4) ein hinterer Abschnitt der Spindelstockbasis gestützt wird, wenn die Spindelstockbasis in der Werkstückeinlege-/Entnahmeposition positioniert ist.

2. Spindelstock-Führungseinheit für eine Werkzeugmaschine nach Patentanspruch 1, wobei der Führungsstützmechanismus folgendes aufweist: Schienen, die fest angeordnet sind, um sich entlang linker und rechter Kantenabschnitte des Span-Sammelraums des festen Betts (4) zu erstrecken; und Führungen, die auf der Spindelstockbasis (16) befestigt sind und verschiebbar mit den Schienen im Eingriff stehen.

3. Spindelstock-Führungseinheit für eine Werkzeugmaschine nach Patentanspruch 1,wobei der Führungsunterstützungsmechanismus folgendes aufweist: eine Kurvenrolle, die auf dem festen Bett (4) vorgesehen ist, und die in rollender Berührung mit einer vorderen unteren Fläche der Spindelstockbasis (16) steht; und eine zweite Kurvenrolle, die an einem rückwärtigen Abschnitt des festen Bettes vorgesehen ist, wobei sie hinter der ersten Kurvenrolle ist, und die in rollender Berührung mit einer hinteren oberen Fläche der Spindelstockbasis (16) steht.

## Revendications

1. Un bloc de guidage de poupée fixe pour machine outils dans lequel un chariot (5) avec un support d'outils (6) se trouvent sur un bâti rigide (4) du côté le plus proche de l'opérateur, et comprenant une poupée fixe (7) de l'autre côté du bâti rigide (4) plus loin de l'opérateur, où la poupée fixe (7) est fixée à l'avant d'une base de poupée fixe oblongue (16), la base de la poupée fixe (16) et la poupée fixe (7) étant mobiles entre une position d'usinage d'une pièce de fabrication pour usiner une pièce de fabrication du côté le plus éloigné de l'opérateur et une position de chargement/déchargement d'une pièce de fabrication pour charger ou décharger la pièce de fabrication de l'autre côté, plus près de l'opérateur, et la partie avant est en porte-à-faux sur le bâti fixe (4) vers l'opérateur lorsque la poupée fixe (7) a avancé en position de chargement/déchargement de la pièce de fabrication, et une portion arrière de la base de la poupée fixe (16) s'étend vers l'arrière du bâti fixe (4) de façon à en dépasser, et dans lequel un espace de collecte des copeaux se trouve dans une portion découpée, le bloc de guidage de poupée fixe comprenant également un mécanisme de soutien de guidage pour soutenir, par le bâti fixe (4), une partie avant de la base de la poupée fixe (16) sur laquelle est montée une poupée fixe (7) lorsque la base de la poupée fixe (16) est en position d'usinage de la pièce de fabrication, et pour soutenir, par le bâti rigide (4), une portion arrière de la base de la poupée fixe (16) lorsque la base de la poupée fixe est en position de chargement/déchargement de la pièce de fabrication.

2. Un bloc de guidage de poupée fixe pour machine outils selon la revendication 1, dans lequel le mécanisme de soutien du guidage comprend : des rails fixés de manière à s'étendre le long des arêtes gauche et droite de l'espace de collecte des copeaux du bâti rigide (4) ; et des guides fixés sur la base de la poupée fixe (16) et pouvant coulisser dans les rails.

3. Un bloc de guidage de poupée fixe pour machine outils selon la revendication 1, dans lequel le mécanisme de soutien de guidage comprend : un galet de cames qui se trouve sur le bâti rigide (4) et qui est en contact de roulement avec la surface inférieure avant de la base de la poupée fixe (16) ; et un second galet de cames qui se trouve sur la portion arrière du bâti rigide (4), à l'arrière du premier galet de cames, et qui est en contact de roulement avec la surface supérieure arrière de la base de la poupée fixe (16).
